# EUROPÄISCHE PATENTANMELDUNG

(11) **EP 1 415 920 A1**
(43) Veröffentlichungstag der Anmeldung: **06.05.2004**
(21) Anmeldenummer: 02090366.2
(22) Anmeldetag: 04.11.2002
(51) Int. Cl.: B65B 69/00, A24B 3/00, B65G 65/23

(54) **Vorrichtung zum Greifen und Flachlegen eines insbesondere mit Tabak befüllten Kartons**

(71) Anmelder: Hauni Maschinenbau AG, 21033 Hamburg (DE)
(72) Erfinder: Appel, Werner, 22175 Hamburg (DE)
(74) Vertreter: Patentanwälte Wenzel & Kalkoff

(57) **Zusammenfassung**

Die Erfindung befaßt sich mit einer Vorrichtung zum Greifen eines insbesondere mit Tabak befüllten Kartons (21), umfassend eine Rahmenanordnung (11), die in vertikaler Richtung auf- und abbewegbar an einer Hubsäule (12) angeordnet ist, die ihrerseits drehbar um ihre vertikale Mittelachse ausgebildet ist, wobei die Rahmenanordnung zwei einander gegenüberliegende Greifarme (18,19) aufweist, mittels der der Karton an einander gegenüberliegenden Seitenflächen (22,23) greifbar ist.

Derartige Vorrichtungen dienen insbesondere zur automatisierten Handhabung von in Kartons verpacktem Tabak.

Durch die erfindungsgemäße Lösung, nämlich daß im Bereich der Rahmenanordnung eine Einrichtung zum Flachlegen des Kartons (24) als integraler Bestandteil der Vorrichtung angeordnet ist, können mehrere Arbeitsschritte, insbesondere auch das Greifen und Flachlegen des Kartons, in einer Aufspannung durchgeführt werden. Dadurch ist eine platzsparende und günstige Vorrichtung realisiert.

## Beschreibung

Die Erfindung betrifft eine Vorrichtung zum Greifen eines insbesondere mit Tabak befüllten Kartons, umfassend eine Rahmenanordnung, die in vertikaler Richtung aufund abbewegbar an einer Hubsäule angeordnet ist, die ihrerseits drehbar um ihre vertikale Mittelachse ausgebildet ist, wobei die Rahmenanordnung zwei einander gegenüberliegende Greifarme aufweist, mittels der der Karton an einander gegenüberliegenden Seitenflächen greifbar ist.

Derartige Vorrichtungen dienen insbesondere dazu, mit Tabak befüllte Kartons von einer Lagerposition zu einer Verarbeitungsstation zu transportieren. Dazu weisen übliche Vorrichtung im wesentlichen drei Bewegungsrichtungen auf, nämlich eine Drehung der Hubsäule um die eigene Mittelachse, eine vertikale Bewegung entlang der Mittelachse sowie eine Drehung der Rahmenanordnung um eine horizontale und damit senkrecht zur Mittelachse verlaufende Achse. Ein Karton wird zum Bewegen von einer Position A zu einer Position B zwischen den Greifarmen eingeklemmt. Dazu sind die Greifarme der Rahmenanordnung über einen Schwenkmechanismus sowie entsprechende Antriebe schwenkbar ausgebildet.

Um die entleerten Kartons wieder verwenden zu können, werden diese im Anschluß an die Entleerung einer separaten Faltvorrichtung zum Flachlegen und Stapeln der zusammengefalteten Kartons zugeführt. Um also die Kartons einerseits zu Greifen, zu Verschwenken, zu Leeren und dann zu Falten sind in herkömmlichen Produktionslinien zwei einzelne separate nachgeordnete Vorrichtungen notwendig.

Dies hat zum einen den Nachteil, daß ein erheblicher Platzbedarf erforderlich ist. Zum anderen ist das Bereitstellen zweier unabhängiger Vorrichtungen auch kostenintensiv.

Aufgabe der vorliegenden Erfindung ist es daher, eine Vorrichtung zu schaffen, die eine multifunktionale Verwendung bei gleichzeitig kompakter Bauweise sicherstellt.

Diese Aufgabe wird durch eine Vorrichtung der eingangs genannten Art dadurch gelöst, daß im Bereich der Rahmenanordnung eine Einrichtung zum Flachlegen des Kartons als integraler Bestandteil der Vorrichtung angeordnet ist. Durch die erfindungsgemäße Ausbildung ist auf überraschend einfache Weise eine äußerst kompakte und dazu noch kostengünstige Vorrichtung geschaffen, die sowohl zum Greifen eines Kartons als auch zum Flachlegen desselben geeignet ist. Mit der erfindungsgemäßen Vorrichtung kann ein Verfahren zum Greifen und Flachlegen eines Kartons in einer Aufspannung durchgeführt werden, das ein platzsparendes Auspacken und Stapeln der zuvor gefalteten Kartons mit sehr geringer Taktzeit und minimalem Aufwand ermöglicht.

In einer bevorzugten Ausführungsform umfaßt die Einrichtung zum Flachlegen des Kartons mindestens ein parallelogrammartiges Gestänge oder dergleichen und ein Klemmelement, wobei das Gestänge oder dergleichen an einem Greifarm angeordnet ist. Durch die parallelogrammartige Ausbildung ist eine Bewegung in zwei Richtungen gleichzeitig gewährleistet, wodurch das Falten des Kartons auf besonders einfache Weise zu realisieren ist. Mit anderen Worten führt die Bewegung mit zwei Richtungskomponenten zwangsläufig zum Falten des Kartons, wobei bereits ein einziges Betätigungsorgan ausreicht, um die Faltbewegung auszuführen.

Vorteilhafterweise ist zusätzlich an einem oder jedem Greifarm eine Verstelleinheit zur linearen Betätigung des Klemmelementes in Richtung des gegenüberliegenden Greifarms angeordnet. Damit ist eine weiter verbesserte Greiffunktion geschaffen, da insbesondere bei der Verwendung von Nägeln auf der dem Karton zugewandten Seite des Klemmelementes Beschädigungen am Karton in Form von Langlöchem vermieden werden können.

Vorteilhafterweise können auch wenigstens zwei Rahmenanordnungen an der Hubsäule angeordnet sein. Dadurch erhöht sich die Leistungsfähigkeit der Vorrichtung erheblich, da zwei Produktionslinien an die erfindungsgemäße Vorrichtung angeschlossen werden können. Des weiteren führt diese Anordnung aber auch zur Reduzierung der Herstellkosten, da an einer gemeinsamen Hubsäule mehrere voll funktionsfähige und autark einsetzbare Rahmenanordnungen sind. Im übrigen ist eine Anordnung mehrerer Rahmenanordnungen an einer Hubsäule nicht nur wartungsfreundlich sondern ermöglicht auch die Aufrechterhaltung des Betriebs bzw. der Produktion bei Ausfall einer Rahmenanordnung. Endlich ist durch die sehr kompakte Konstruktion eine sehr platzsparende Anordnung sichergestellt.

Weitere bevorzugte Ausführungsformen und vorteilhafte Merkmale der Erfindung ergeben sich aus den Unteransprüchen und der Beschreibung. Besonders bevorzugte Ausführungsformen der erfindungsgemäßen Vorrichtung werden im folgenden anhand der beigefügten Zeichnung näher erläutert. In der Zeichnung zeigt:
- Fig. 1: eine perspektivische Ansicht einer ersten Ausführungsform der erfindungsgemäßen Vorrichtung mit einem geschlossenen Karton,
- Fig. 2: eine Draufsicht auf eine Rahmenanordnung mit einem geschlossenen Karton,
- Fig. 3: eine Draufsicht auf eine weitere Ausführungsform der Rahmenanordnung mit geschlossenem Karton,
- Fig. 4: eine Ansicht der Rahmenanordnung gemäß Figur 3 von unten,
- Fig. 5: eine Draufsicht auf die Rahmenanordnung gemäß Figur 3 mit geöffnetem Karton,

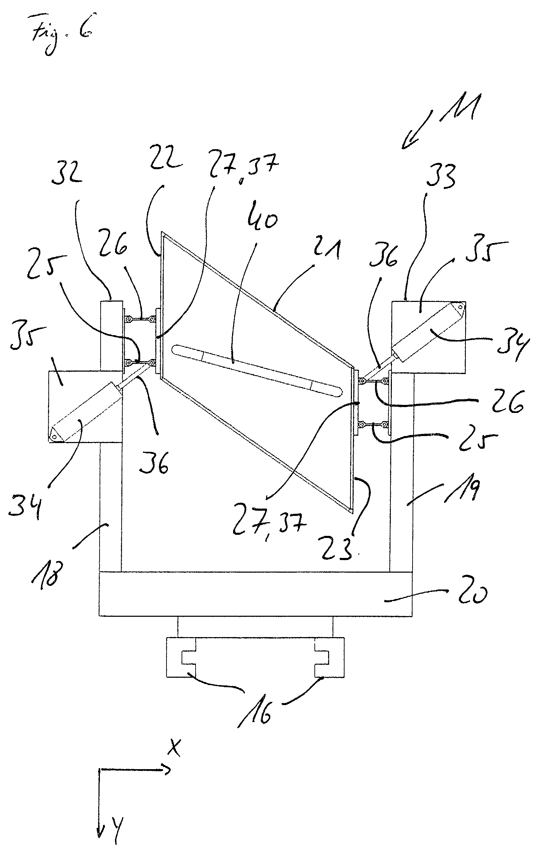

- Fig. 6: eine Ansicht auf die Rahmenanordnung gemäß Figur 5 von unten,
- Fig. 7: eine Ansicht einer weiteren Ausführungsform der Rahmenanordnung mit geschlossenem Karton von unten,
- Fig. 8: eine Draufsicht einer weiteren Ausführungsform der Rahmenanordnung mit geöffnetem Karton,
- Fig. 9: eine Ansicht einer weiteren Ausführungsform der Rahmenanordnung mit geöffnetem Karton von unten,
- Fig. 10: eine perspektivische Ansicht einer weiteren Ausführungsform der erfindungsgemäßen Vorrichtung mit zwei um 180° versetzten Rahmenanordnungen, und
- Fig. 11: eine perspektivische Ansicht einer weiteren Ausführungsform der erfindungsgemäßen Vorrichtung mit zwei um 90° versetzten Rahmenanordnungen.

Die im folgenden beschriebenen Vorrichtungen dienen zum Greifen eines insbesondere mit Tabak befüllten Kartons. Mit den Vorrichtungen ist jedoch u.a. auch ein Verschwenken, Halten und Entleeren der Kartons sowie ein Zusammenfalten derselben möglich.

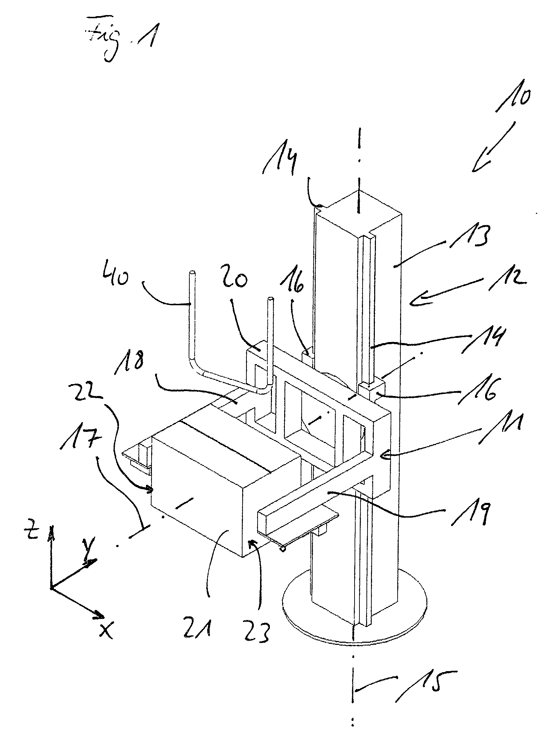

Die in der Figur 1 dargestellte Vorrichtung 10 umfaßt eine Rahmenanordnung 11, die im Bereich einer Hubsäule 12 angeordnet ist. Die Hubsäule 12 weist ein vertikales Trägerelement 13 mit Führungsschienen 14 zur Aufnahme der Rahmenanordnung 11 auf. Die Hubsäule 12 selbst ist um ihre vertikale Mittelachse 15 drehbar mittels eines nicht dargestellten Antriebs ausgebildet. Auf den Führungsschienen 14 ist die Rahmenanordnung 11 mit korrespondierenden Führungselementen 16 über einen nicht dargestellten Antrieb entlang der Mittelachse 15 auf- und abbewegbar. Zusätzlich ist die Rahmenanordnung 11 noch um eine horizontale Achse 17 dreh- bzw. schwenkbar, so daß mindestens drei Bewegungsrichtungen gewährleistet sind. Es müssen jedoch nicht sämtliche Bewegungsmöglichkeiten realisiert sein. Alternativ kann die Rahmenanordnung 11 z.B. auch drehfest an einer ortsfesten Hubsäule 12 angeordnet sein.

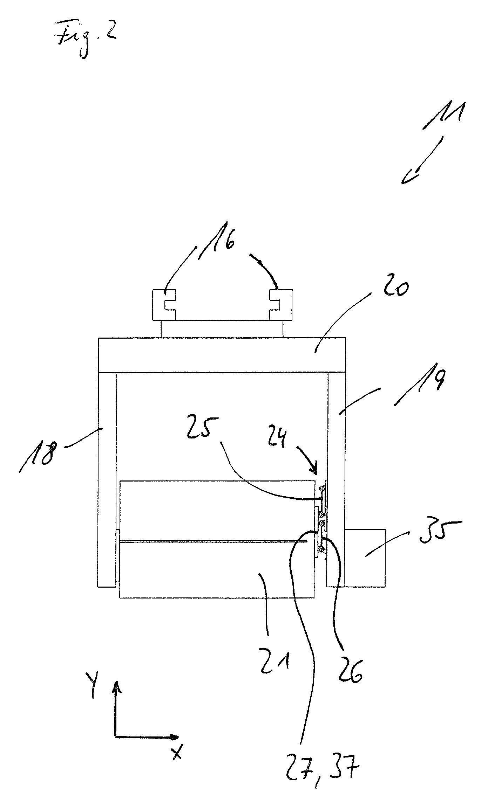

Die Rahmenanordnung 11 ist im gezeigten Ausführungsbeispiel in der Draufsicht etwa U-förmig ausgebildet (siehe insbesondere Figur 2) und umfaßt zwei einander gegenüberliegende Greifarme 18 und 19 mit parallel verlaufenden Längsachsen, wobei die Greifarme 18, 19 über einen Querträger 20 miteinander verbunden sind. Die Greifarme 18, 19 bilden mit dem Querträger 20 eine Einheit. Bevorzugt sind die Greifarme 18, 19 und der Querträger 20 miteinander verschweißt. Es sind aber auch andere, auch lösbare Verbindungen zur Bildung der Rahmenanordnung 11 möglich. Auch können die Greifarme 18, 19 schwenkbar am Querträger 20 angeordnet sein. Ebenfalls ist eine Konstruktion denkbar, bei der ein Greifarm 18 oder 19 schwenkbar am Querträger 20 und der andere Greifarm 18 oder 19 fest am Querträger 20 ist. Die Rahmenanordnung 11 kann auch eine andere als die U-Form aufweisen. Entscheidend ist, daß die Greifarme 18, 19 derart angeordnet und ausgebildet sind, daß ein Karton 21 an einander gegenüberliegenden Seitenflächen 22, 23 möglichst sicher greifbar ist. Ein sicherer Griff wird beispielsweise durch flächige Anlage an den Seitenflächen 22, 23 sichergestellt.

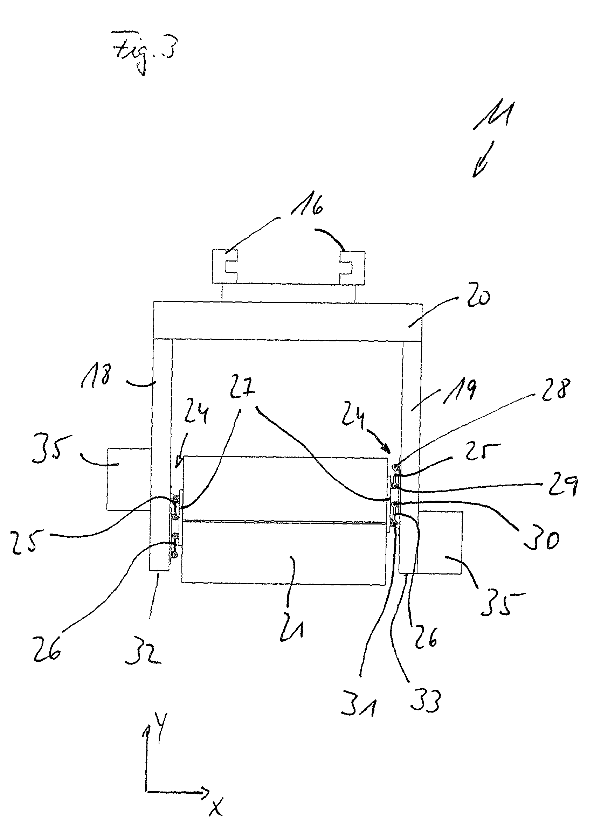

In Figur 2 ist eine Rahmenanordnung 11 gezeigt, bei der an einem Greifarm 19 eine Einrichtung 24 zum Flachlegen des Kartons 21 angeordnet ist. Die Einrichtung 24 bildet einen integralen Bestandteil der Vorrichtung 10 und ist vorzugsweise zwischen den Greifarmen 18, 19 angeordnet. Die Einrichtung 24 selbst umfaßt im gerade beschriebenen Ausführungsbeispiel mindestens ein parallelogrammartiges Gestänge oder dergleichen in Form von z.B. zwei Scharnieren 25, 26 sowie ein Klemmelement 27. Im Beispiel gemäß Figur 3 umfaßt die Einrichtung 24 zwei parallelogrammartige Gestänge oder dergleichen, wobei jedem Greifarm 18, 19 ein Gestänge oder dergleichen zugeordnet ist. Beide Gestänge umfassen jeweils die bereits beschriebenen Scharniere 25, 26. Diese Scharniere 25, 26 bilden zusammen mit jeweils einem Greifarm 18, 19 und einem Klemmelement 27 das Parallelogramm. Dabei sind die Scharniere 25, 26 zwischen dem Klemmelement 27 und dem Greifarm 18 bzw. 19 angeordnet.

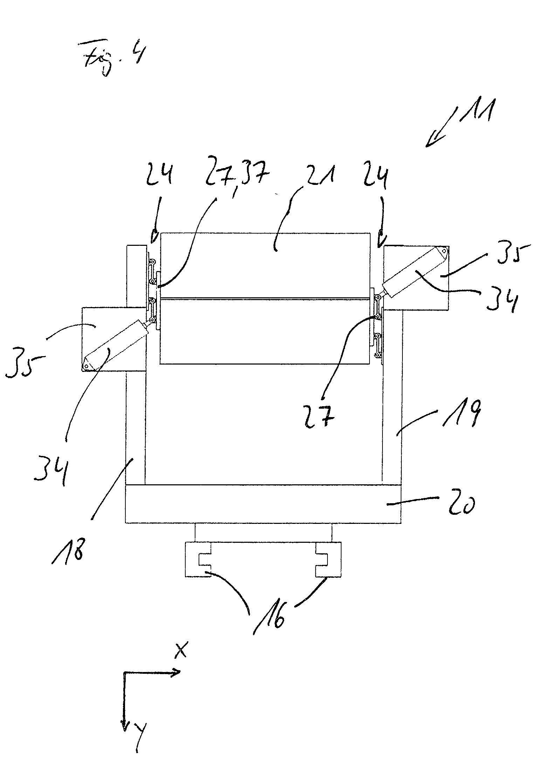

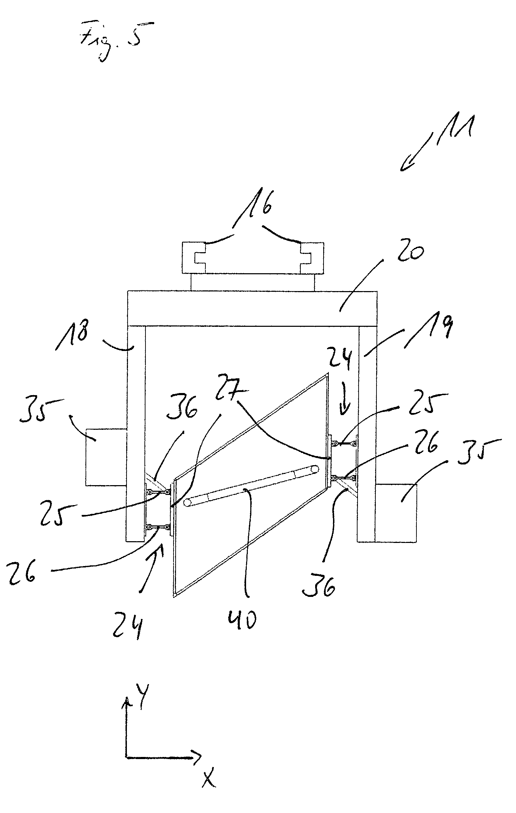

In zusammengefaltetem Zustand des Parallelogramms liegen die vier Gelenkpunkte 28, 29, 30, 31 etwa in einer Ebene, die sich parallel zur Längserstreckung der Greifarme 18, 19 erstreckt. Bei der Ausführungsform gemäß Figur 3 sind die einander gegenüberliegenden Parallelogramme versetzt zueinander angeordnet. Das bedeutet, daß die Gelenkpunkte 28 bis 31 an einem Greifarm, z.B. am Greifarm 18 nahe am freien Ende 32 des Greifarmes 18 angeordnet sind, während die Gelenkpunkte 28 bis 31 am anderen Greifarm 19 beabstandet zum freien Ende 33 angeordnet sind. In ausgefahrenem Zustand der Scharniere 25, 26 erstrecken sich diese nahezu senkrecht zum Klemmelement 27 und zum Greifarm 18, 19 (siehe z.B. Figur 5). Zum Ausfahren der Scharniere 25, 26 ist jede Einrichtung 24 mit einem Betätigungsorgan 34 versehen. Das Betätigungsorgan 34 kann als Druckzylinder oder Zugzylinder ausgebildet sein. Auch andere übliche Verstellelemente können verwendet werden. Jedes Betätigungsorgan 34 ist an einer Tragplatte 35 befestigt. Ein Kolben 36 des in den Figuren 4 und 5 dargestellten Druckzylinders ist zum Ausfahren und Einziehen der Scharniere 25, 26 am Klemmelement 27 und/oder einem der Scharniere 25, 26 vorzugsweise im Bereich eines Gelenkpunktes 28 bis 31 befestigt.

Durch die beschriebene Anordnung bzw. Konstruktion der Einrichtung 24 zum Falten des Kartons 21 in Form beispielsweise des zuvor beschriebenen Parallelogramms ist diese bereits mit einem einzigen Betätigungsorgan 34 in mindestens zwei Bewegungsrichtungen bewegbar. Zum einen ist eine Bewegung der Einrichtung 24 bzw. des Klemmelementes 27 senkrecht zu dem gegenüberliegenden Greifarm 18 bzw. 19 in der durch die Greifarme 18, 19 aufgespannten Ebene möglich. Diese Bewegungsrichtung ist in den Figuren (siehe z.B. Figur 2) mit x-Richtung bezeichnet. Eine Bewegung quer zur x-Richtung, nämlich in y-Richtung ist ebenfalls gewährleistet. Die Bewegung in y-Richtung verläuft parallel zur Längserstreckung der Greifarme 18, 19. Die Bewegungsrichtungen in x- und y-Richtung sind auch überlagerbar, so daß die Klemmelemente 27 beim Betätigen des Betätigungsorgans 34 eine Schwenkbewegung auf einer Kreisbahn ausführen.

Die einander gegenüberliegenden Klemmelemente 27 sind durch die gegenläufige Verstellbarkeit der Scharniere 25, 26 relativ zueinander bzw. relativ zu dem jeweils zu dem gegenüberliegenden Greifarm 18, 19 bewegbar, wodurch auch die Seitenflächen 22, 23 des Kartons 21 eine Relativbewegung zueinander ausführen können, da die Klemmelemente 27, die üblicherweise eine Halteplatte 37 mit auf der dem Karton 21 zugewandten Seite angeordneten Nägeln und/oder Leisten umfassen, formschlüssig und/oder kraftschlüssig am Karton 21 anliegen. Im in Figur 4 gezeigten Ausführungsbeispiel sind die Betätigungsorgane 34 daher diagonal gegenüberliegend angeordnet. Das bedeutet im beschriebenen Fall, daß die Mittelachsen 38 der Betätigungsorgane 34 etwa parallel aber versetzt zueinander verlaufen. Durch die Ausbildung der Betätigungsorgane 34 als Druckzylinder drückt ein Druckzylinder am Greifarm 18 die Scharniere 25, 26 und damit das Klemmelement 27 weg vom Querträger 20, während der andere Druckzylinder am Greifarm 19 die Scharniere 25, 26 und damit das Klemmelement 27 in Richtung des Querträgers 20 drückt.

Für den Fall, daß die beiden Betätigungsorgane 34 symmetrisch zur Mittelebene 39 der Rahmenanordnung 11 angeordnet sind (nicht dargestellt), d.h. z.B. beide Betätigungsorgane 34 auf der dem freien Ende 32, 33 gegenüberliegenden Seite der Einrichtung 24 bzw. der Scharniere 25, 26, so daß sich die Mittelachsen 38 kreuzen, müßte ein Betätigungsorgan 34 als Druckzylinder und ein Betätigungsorgan 34 als Zugzylinder ausgebildet sein.

Um einen auf einer Seite geöffneten Karton 21 vollständig zur Bildung eines aus dem Kartonzuschnitt gebildeten, an zwei gegenüberliegenden Seiten geöffneten und ansonsten allseitig geschlossenen Hohlkörpers öffnen zu können, was Voraussetzung für das Flachlegen des Kartons 21 ist, ist im Bereich der Hubsäule 12 ein Anschlag 40 angeordnet. Der Anschlag 40 muß nicht zwingend nahe der Hubsäule 12 angeordnet sein. Entscheidend ist, daß die Position des Anschlages 40 durch die Verfahrwege und Drehungen der Hubsäule 12 und der Rahmenanordnung 11 erreichbar ist. Vorzugsweise ist der Anschlag 40 als stationärer Deckelöffner ausgebildet. Es ist allerdings auch möglich, daß der Anschlag 40 selbst bewegbar ausgebildet und in eine Arbeitsposition bringbar ist.

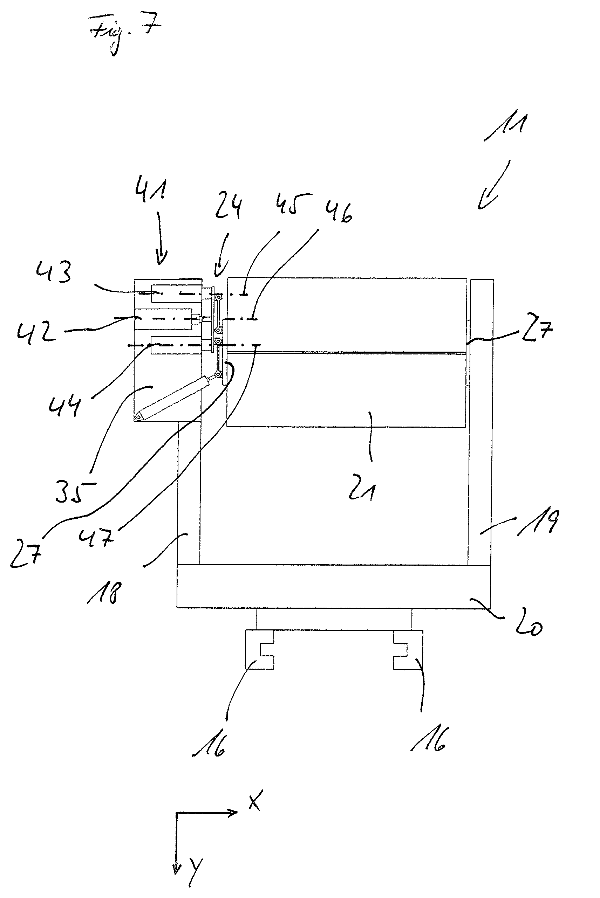

In einer in Figur 7 gezeigten Ausführungsform ist zusätzlich zur Einrichtung 24 eine Verstelleinheit 41 angeordnet. Die Verstelleinheit 41 ist bevorzugt aus einem Druckzylinder 42 sowie zwei zu beiden Seiten des Druckzylinders 42 angeordneten Linearführungen 43, 44 gebildet. Allerdings kann die Anordnung der einzelnen Elemente der Verstelleinheit 41 sowie auch die Anzahl der Druckzylinder 42 und Linearführungen 43, 44 je nach Anwendungsfall variieren. Der Druckzylinder 42 sowie die Linearführungen 43, 44 sind an der Tragplatte 35 befestigt und mit ihren Mittelachsen 45, 46, 47 parallel zueinander ausgerichtet. Die Mittelachsen 45 bis 47 verlaufen senkrecht zum Klemmelement 27 und damit in der gezeigten Ausführungsform auch senkrecht zum Greifarm 18 bzw. 19 in der durch die Greifarme 18, 19 aufgespannten Ebene. Der Druckzylinder 42 ist als Druckluftzylinder ausgebildet. Es können aber auch hydraulische Druckzylinder oder andere übliche Einrichtungen zur Erzeugung einer linearen Bewegung verwendet werden.

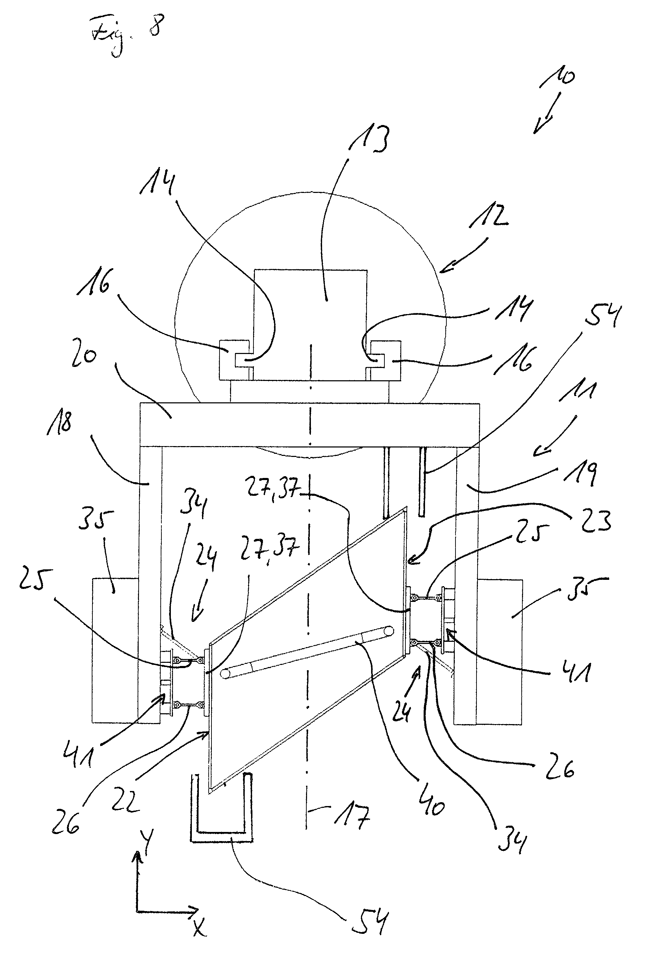

In Figur 8 ist ein bevorzugtes Beispiel gezeigt, bei dem an beiden Greifarmen 18, 19 neben den Scharnieren 25, 26 zur Bildung des Parallelogramms eine Verstelleinheit 41 zur linearen Betätigung des Klemmelementes 27 in Richtung des gegenüberliegenden Greifarms 18 bzw. 19 angeordnet ist. Mittels der Verstelleinheiten 41 ist eine Zustellbewegung der Klemmelemente 27 bzw. der mit z.B. Nägeln versehenen Halteplatten 37 ausschließlich in x-Richtung, also senkrecht zu den Seitenflächen 22, 23 des Kartons 21 möglich, so daß insbesondere das Eintauchen und Austreten der Nägel in den Karton 21 sowie aus diesem heraus beschädigungsfrei erreicht werden kann. Mit der Anordnung von zwei Parallelogrammen an den gegenüberliegenden Greifarmen 18, 19 wird auf einfache Weise der Verstellweg der Klemmelemente 27 halbiert.

Die Verstelleinheit 41 ist fest an einem oder beiden Greifarmen 18, 19 befestigt, so daß die Scharniere 25, 26 zwischen der Verstelleinheit 41 und dem Klemmelement 27 angeordnet sind. Zwischen den Greifarmen 18, 19 sind zusätzlich U-förmige Anschläge 54 vorgesehen, die einerseits zur Führung des gefalteten Kartons 21 dienen und andererseits den Karton 21 beim Zurückbewegen der Klemmelemente 27 bzw. beim Herausziehen der Nägel aus dem Karton 21 halten, um ein erneutes Auffalten des Kartons 21 zu verhindern.

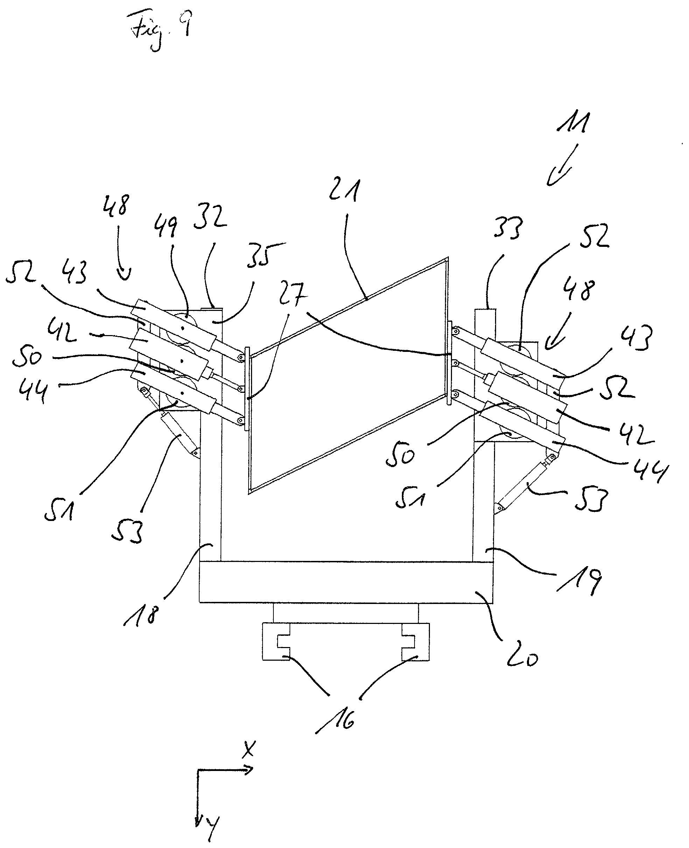

Als Einrichtung 24 zum Falten bzw. Flachlegen des Kartons 21 kann auch eine verschwenkbare Verstelleinheit 48 (siehe Figur 9) vorgesehen sein. Die Verstelleinheit 48 weist im wesentlichen den gleichen Aufbau auf, wie die bereits zuvor beschriebene Verstelleinheit 41. Allerdings weisen der Druckzylinder 42 und die Linearführungen 43, 44 zusätzlich einen Drehteller 49, 50, 51 auf. Mittels der Drehteller 49 bis 51 sind der Druckzylinder 42 und die Linearführungen 43, 44 separat um eine parallel zur Mittelachse 15 der Hubsäule 12 verlaufende Drehachse verschwenkbar. Zur Synchronisation der Schwenkbewegung von Druckzylinder 42 einerseits und Linearführungen 43, 44 andererseits, d.h. paralleles Verschwenken von Druckzylinder 42 und Linearführungen 43, 44 um denselben Winkel, sind diese über ein Verbindungselement 52, das als Stange, Flachprofil oder dergleichen ausgebildet sein kann, miteinander verbunden. Das Verbindungselement 52 ist seinerseits mit einem Betätigungsorgan 53 verbunden. Das Betätigungsorgan 53 kann als Druck- oder Zugzylinder ausgebildet sein. Andere übliche Betätigungselemente sind ebenfalls verwendbar. Das Betätigungsorgan 53 ist am Greifarm 18 bzw. 19 befestigt. Mittels der Druckzylinder 42 ist eine Zustellbewegung in x-Richtung gewährleistet. Durch das Verschwenken der Verstelleinheit 48 läßt sich zusätzlich eine Relativbewegung der Klemmelemente 27 mit einer Komponente in γ-Richtung erzeugen. Alternativ kann eine Verstelleinheit 48 auch lediglich an einem der Greifarme 18,19 vorgesehen sein.

Wie aus den dargestellten Ausführungsformen ersichtlich, sind nahezu beliebige Zusammenstellungen der beschriebenen Elemente vorstellbar. So kann eine Rahmenanordnung 11 z.B. auch an einem einzelnen Greifarm 18 oder 19 eine zuvor beschriebene Einrichtung 24 aufweisen, während am anderen Greifarm 18 bzw. 19 lediglich eine Verstelleinheit 41 mit einem Klemmelement 27 vorgesehen ist.

Die Einrichtung 24 zum Falten bzw. Flachlegen des Kartons 21 ist jedoch auch als Einzelvorrichtung einsetzbar. Die Einrichtung 24 greift dabei von außen an die zu faltenden Kartons 21 an. Mit den Klemmelementen 27 wird der Karton 21 zunächst durch die auf der dem Karton 21 zugewandten Seite angeordneten Nägel oder dergleichen gehalten. Durch eine Relativbewegung eines beispielsweise am Greifarm 18 angeordneten Klemmelementes 27 zu dem gegenüberliegenden Greifarm 19 oder einer Relativbewegung der einander gegenüberliegenden Klemmelemente 27, die bevorzugt jeweils in entgegengesetzter Richtung in x-Richtung bewegt werden, führt dies in Überlagerung der Bewegung in y-Richtung zum Flachlegen des Kartons 21. Aus den genannten Gründen ist die Einrichtung 24 auch bei bestehenden Vorrichtungen 10 der gattungsgemäßen Art mit beispielsweise schwenkbaren Greifarmen 18, 19 besonders einfach nachrüstbar.

Im folgenden wird ein Arbeitstakt einer der erfindungsgemäßen Vorrichtungen 10 beschrieben:
Die Rahmenanordnung 11 wird entlang der Hubsäule 12 zum Greifen eines Kartons 21 von der Aufgabe nach unten gefahren. Mittels der Klemmelemente 27 wird der Karton 21 gegriffen und eine untere (nicht dargestellte) Deckelhalterung ausgefahren. Die Rahmenanordnung 11 fährt mit dem Karton 21 entlang der Hubsäule 12 wieder aufwärts. Anschließend wird die Rahmenanordnung 11 mit dem Karton 21 um etwa 90° um die Mittelachse 15 der Hubsäule 12 in Richtung eines Transportbandes verschwenkt. Von einer Bedienperson werden Verpackungsmaterialien, wie z.B. den Karton umschließende Bänder sowie üblicherweise innerhalb des Kartons 21 zur Abdeckung vorhandene Papiereinlagen, gelöst bzw. entnommen. Danach wird eine obere (ebenfalls nicht dargestellte) Deckelhalterung ausgefahren. Zur Vorbereitung der Entleerung des Kartons 21 wird dieser mittels der Rahmenanordnung 11 entlang der Hubsäule 12 geringfügig nach oben verfahren und um 180° um die horizontale Dreh-Achse 17 verschwenkt. Durch Wegschwenken der unteren Deckelhalterung fällt der Tabak durch Schwerkraft aus dem Karton 21. Nach dem Entleeren wird der obere Deckelhalter zurück geschwenkt. Die unten befindlichen, quasi frei hängenden Deckel bleiben nach dem Entleeren geöffnet. Durch Betätigung z.B. der Betätigungsorgane 34 werden die zuvor etwa in einem rechten Winkel zueinander bzw. aneinander liegenden Seitenwände des Kartons 21 vorgespannt, so daß die Seitenwände dann mit einem Winkel kleiner bzw. größer als 90° - also eine Raute bildend - aneinander liegen. Mit der Bildung einer derartigen Raute sind die Deckel bei der nachfolgenden Drehung der Rahmenanordnung um 180° gegen Zuklappen gesichert. Die nunmehr unteren noch geschlossenen Deckel werden dann durch eine Aufwärtsbewegung der Rahmenanordnung 11 gegen den Anschlag 40 geöffnet. Hierfür wird die Hubsäule 12 zuvor derart gedreht, daß sich der leere Karton 21 unterhalb des Anschlages 40 befindet. Sobald der Anschlag 40 die Deckel aufgestoßen hat, kann es bereits passieren, daß der Karton 21 allein durch die Vorspannung in sich zusammen fällt und in eine unter der Rahmenanordnung 11 befindliche Lagerposition rutscht.

Parallel zur Deckelöffnung jedoch, d.h. sobald der Anschlag 40 die noch geschlossenen Deckel öffnet, werden die Klemmelemente 27 durch die vorgespannten Betätigungsorgane 34 aufeinander zu und relativ zueinander parallel in entgegengesetzte Richtung bewegt (also Hub in x- und y-Richtung), so daß der Karton 21 über die Diagonale gefaltet wird. Anschließend fällt der Karton 21 nach unten z.B. auf eine Rutsche, die den Karton 21 in den Speicher auf eine Palette führt. Möglicherweise ist zum Lösen der Klemmelemente 27 bzw. der daran befindlichen Nägel aus dem Karton 21 eine Bewegung gegen vorzugsweise U-förmige Anschläge 54 zweckmäßig. Die Anschläge 54 verhindern einerseits das nicht gewünschte Auffalten des Kartons 21 und bilden gleichzeitig ein Widerlager für den Karton 21, so daß die Nägel beim Zurückziehen sicher aus dem Karton 21 gezogen werden. Abschließend wird die Rahmenanordnung 11 in ihre Ausgangsposition zurückgefahren.

Grundsätzlich wird das Greifen, Halten, Schwenken, Entleeren und Falten des Kartons 21 mit allen Ausführungsformen der erfindungsgemäßen Vorrichtung 10 nach demselben gerade beschriebenen Verfahrensprinzip durchgeführt, allerdings angepaßt an die konstruktiven Unterschiede der Vorrichtungen 10. Durch die erfindungsgemäßen Vorrichtungen 10 ist somit ein Greifen, Halten, Verschwenken, Entleeren und Falten des Kartons 21 in einer einzigen Aufspannung desselben gewährleistet, was neben einer verkürzten Taktzeit auch zu einem reduzierten Platzbedarf führt.

Um den Karton 21 einerseits zu greifen und andererseits nach dem Entleeren auch zu falten, sind unterschiedliche Drücke der Betätigungsorgane bzw. Druckzylinder 34 und/oder 42 und/oder 53 zweckmäßig. Zum Halten eines vollen Kartons 21, der üblicherweise ca. 200kg wiegt, ist ein Druck auf dem oder jedem Betätigungsorgan bzw. Druckzylinder 34 und/oder 42 und/oder 53 von etwa drei bis vier bar erforderlich. Sobald der Tabak aus dem Karton 21 gefallen ist, wird der Druck auf Atmosphärendruck bzw. geringfügig höheren Druck reduziert, um einerseits den Karton 21 nicht zu beschädigen, andererseits aber ein geringfügiges Verkanten des Kartons 21 zu erreichen. Durch diese auf den Karton 21 aufgebrachte Vorspannung wird das spätere Falten unterstützt, da der Karton 21, sobald er an beiden Stirnseiten geöffnet wird, aufgrund seiner instabilen bzw. labilen Gleichgewichtslage in sich zusammenfällt.

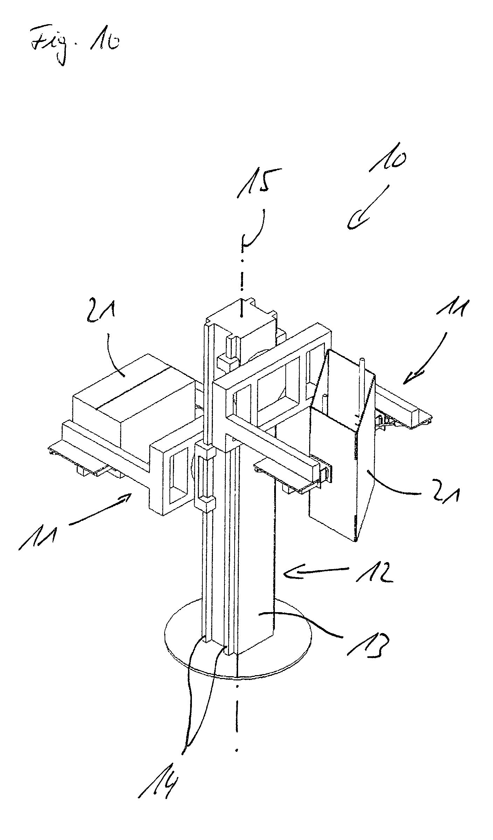

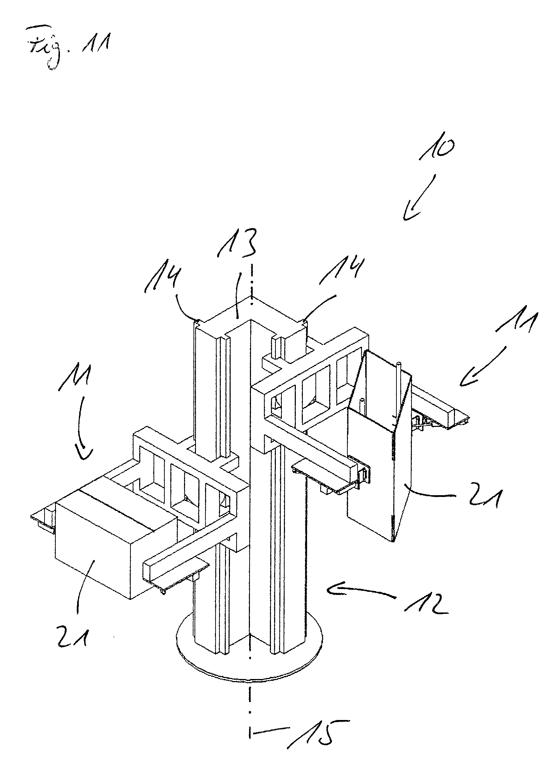

Die mit einer solchen Vorrichtung 10 erreichbare Leistung, also z.B. kg Tabak pro Stunde bzw. Anzahl Kartons pro Stunde, wird durch die Taktzeit bestimmt. Um also die Leistung zu steigern, sind üblicherweise mehrere Einzelvorrichtungen erforderlich, was jedoch die Auspackkosten steigert, den Platzbedarf erhöht und die Störanfälligkeit heraufsetzt. Erfindungsgemäß können daher gemäß Figur 10 auch zwei Rahmenanordnungen 11 an einer gemeinsamen Hubsäule 12 angeordnet. Es können jedoch auch drei oder vier solcher Rahmenanordnungen 11 an einer Hubsäule 12 angeordnet sein. Im Beispiel gemäß Figur 10 sind die beiden Rahmenanordnungen 11 um 180° versetzt zueinander an der Hubsäule 12 angeordnet. Besonders bevorzugt ist die Anordnung von zwei um 90° versetzten Rahmenanordnungen 11, wie in Figur 11 dargestellt. In einem solchen Fall ist die Hubsäule 12 bevorzugt als L-Profil ausgebildet, um platzsparend sämtliche Bewegungen jeder Rahmenanordnung 11 zu gewährleisten. Auch sind die einzelnen Rahmenanordnungen 11 unabhängig voneinander betätigbar, so daß verschiedene Bearbeitungsvorgänge parallel ausgeführt werden können.

## Patentansprüche

1. Vorrichtung zum Greifen eines insbesondere mit Tabak befüllten Kartons (21), umfassend eine Rahmenanordnung (11), die in vertikaler Richtung auf- und abbewegbar an einer Hubsäule (12) angeordnet ist, die ihrerseits drehbar um ihre vertikale Mittelachse (15) ausgebildet ist, wobei die Rahmenanordnung (11) zwei einander gegenüberliegende Greifarme (18, 19) aufweist, mittels der der Karton (21) an einander gegenüberliegenden Seitenflächen (22, 23) greifbar ist, **dadurch gekennzeichnet, daß** im Bereich der Rahmenanordnung (11) eine Einrichtung (24) zum Flachlegen des Kartons (21) als integraler Bestandteil der Vorrichtung (10) angeordnet ist.

2. Vorrichtung nach Anspruch 1, **dadurch gekennzeichnet, daß** die Rahmenanordnung (11) um eine horizontale Achse schwenkbar bzw. drehbar ausgebildet ist.

3. Vorrichtung nach Anspruch 1 oder 2, **dadurch gekennzeichnet, daß** die Einrichtung (24) zwischen den Greifarmen (18,19) angeordnet ist.

4. Vorrichtung nach einem der Ansprüche 1 bis 3, **dadurch gekennzeichnet, daß** die Einrichtung (24) mindestens ein parallelogrammartiges Gestänge oder dergleichen und ein Klemmelement (27) umfaßt, wobei das Gestänge oder dergleichen an einem Greifarm (18,19) angeordnet ist.

5. Vorrichtung nach einem der Ansprüche 1 bis 4, **dadurch gekennzeichnet, daß** die Einrichtung (24) zwei parallelogrammartige Gestänge umfaßt, wobei jedem Greifarm (18,19) ein Gestänge oder dergleichen zugeordnet ist.

6. Vorrichtung nach Anspruch 4 oder 5, **dadurch gekennzeichnet, daß** jedes Gestänge oder dergleichen mit mindestens einem Betätigungsorgan (34) versehen ist.

7. Vorrichtung nach einem der Ansprüche 4 bis 6, **dadurch gekennzeichnet, daß** jedes Gestänge oder dergleichen zwischen dem Klemmelement (27) und dem Greifarm (18, 19) angeordnet ist.

8. Vorrichtung nach einem der Ansprüche 4 bis 7, **dadurch gekennzeichnet, daß** jedes Klemmelement (27) eine Halteplatte mit auf der dem Karton (21) zugewandten Seite angeordneten Nägeln und/oder Leisten umfaßt.

9. Vorrichtung nach einem der Ansprüche 1 bis 8, **dadurch gekennzeichnet, daß** die Einrichtung (24) in mindestens zwei Bewegungsrichtungen bewegbar ist.

10. Vorrichtung nach einem der Ansprüche 1 bis 9, **dadurch gekennzeichnet, daß** die Einrichtung (24) bzw. das oder jedes Klemmelement (27) sowohl senkrecht zu dem gegenüberliegenden Greifarm (18, 19) in der durch die Greifarme (18, 19) aufgespannten Ebene als auch parallel zur Längserstreckung des Greifarmes (18, 19) bewegbar ist.

11. Vorrichtung nach einem der Ansprüche 5 bis 10, **dadurch gekennzeichnet, daß** einander gegenüberliegende Gestänge oder dergleichen bzw. die Klemmelemente (27) gegenläufig verstellbar sind.

12. Vorrichtung nach einem der Ansprüche 1 bis 11, **dadurch gekennzeichnet, daß** beide Greifarme (18, 19) verschwenkbar an der Rahmenanordnung (11) angebracht sind.

13. Vorrichtung nach einem der Ansprüche 1 bis 11, **dadurch gekennzeichnet, daß** mindestens ein Greifarm (18, 19) feststehend an der Rahmenanordnung (11) angebracht ist.

14. Vorrichtung nach einem der Ansprüche 1 bis 11, **dadurch gekennzeichnet, daß** die Rahmenanordnung (11) starr mit feststehenden Greifarmen (18, 19) ausgebildet ist.

15. Vorrichtung nach einem der Ansprüche 1 bis 14, **dadurch gekennzeichnet, daß** im Bereich der Hubsäule (12) ein Anschlag (40) angeordnet ist.

16. Vorrichtung nach Anspruch 15, **dadurch gekennzeichnet, daß** der Anschlag (40) als stationärer Deckelöffner ausgebildet ist.

17. Vorrichtung nach einem der Ansprüche 4 bis 16, **dadurch gekennzeichnet, daß** zusätzlich an einem oder jedem Greifarm (18, 19) eine Verstelleinheit (41) zur linearen Bewegung des Klemmelementes (27) in Richtung des gegenüberliegenden Greifarms (18, 19) angeordnet ist.

18. Vorrichtung nach Anspruch 17, **dadurch gekennzeichnet, daß** das Gestänge oder dergleichen zwischen Klemmelement (27) und Verstelleinheit (41) angeordnet ist.

19. Vorrichtung nach einem der Ansprüche 1 bis 18, **dadurch gekennzeichnet, daß** die Einrichtung (24) eine verschwenkbare Verstelleinheit (48) umfaßt.

20. Vorrichtung nach einem der Ansprüche 17 bis 19, **dadurch gekennzeichnet, daß** jede Verstelleinheit (41, 48) aus einem Druckzylinder (42) sowie mindestens einer Linearführung (43, 44) gebildet ist.

21. Vorrichtung nach Anspruch 20, **dadurch gekennzeichnet, daß** die Mittelachsen (45, 46, 47) des Druckzylinders (42) und der Linearführungen (43, 44) senkrecht zur Halteplatte (37) in der durch die Greifarme (18, 19) aufgespannten Ebene verlaufen.

22. Vorrichtung nach einem der Ansprüche 1 bis 21, **dadurch gekennzeichnet, daß** wenigstens zwei Rahmenanordnungen (11) an der Hubsäule (12) angeordnet sind.

23. Vorrichtung nach Anspruch 22, **dadurch gekennzeichnet, daß** zwei Rahmenanordnungen (11) um 90° versetzt zueinander an der Hubsäule (12) angeordnet sind.

24. Vorrichtung nach Anspruch 22 oder 23, **dadurch gekennzeichnet, daß** die Rahmenanordnungen (11) unabhängig voneinander betätigbar sind.
